# EUROPEAN PATENT APPLICATION

(11) **EP 1 411 078 A1**
(43) Date of publication of application: **21.04.2004**
(21) Application number: 03256480.9
(22) Date of filing: 15.10.2003
(51) Int. Cl.: C08J 11/04, C08J 11/06

(54) **Process for recycling coloured thermoplastic moulded articles**

(30) Priority: 16.10.2002 GB 0224072
(71) Applicant: ColorMatrix Europe Ltd, Knowsley, Merseyside L34 9GT (GB)
(72) Inventor: Zeng, Fuquan, Cowling Yorkshire, BD22 0AJ (GB); Frost, Mark, Knowsley Merseyside, L34 9GT (GB)
(74) Representative: W.P. Thompson & Co.

(57) **Abstract**

A colourant additive composition is described as well as its use for addition to thermoplastic moulding compositions, for example thermoplastic moulding compositions comprising polyesters, such as polyethylene terephthalate. The colourant additive composition comprises at least one thermolabile sublimable colourant. The colourant additive composition is suitable for use in thermoplastic moulding compositions for making, for example, bottles which can be recycled by a recycling process which includes the step of subjecting the recycled material to elevated temperature conditions for a period of time sufficient to cause a desirable change of colour by extraction of at least some of the thermolabile sublimable colourant, which extracted colourant may be recovered for re-use.

## Description

This invention relates to a process for recycling coloured thermoplastic moulded articles, polymer colourant additive compositions and their use and to recyclable materials. In particular it relates to a colourant additive composition and its use for addition to thermoplastic moulding compositions and to recyclable moulded articles containing said additive.

Polyethylene terephthalate is widely employed in the manufacture of packaging items. One large application for polyethylene terephthalate is in the manufacture of food packaging items and, in particular, beverage bottles. Such beverage bottles are extensively utilised for carbonated soft drinks and are increasingly more attractive, for safety considerations, in the packaging of alcoholic beverages such as beer. Bottles used for still or carbonated water or other soft drinks are typically colourless, green or blue. However, in the case of beer, it is conventional to provide an amber coloured bottle in order to protect the contents from the deleterious effects of ultra-violet light.

Other uses for polyethylene terephthalate moulding compositions include the manufacture of packages for agrochemicals, cosmetics, detergents and the like.

Polyethylene terephthalate bottles are usually manufactured using a two stage process. Granules of polyethylene terephthalate, along with any relevant additives, are injection moulded in a first step to produce a preform. The resulting preform is then blow moulded, possibly at a different factory, in a second step to the desired shape. Machines are also available which make bottle preforms and then blow them immediately into bottles.

Colouring of the preform is typically achieved by including a colourant additive with the polyethylene terephthalate granules. The colourant additive may be added as a solid master batch in the form of granules or powder. Alternatively, the colourant additive may be suspended or dissolved in a liquid carrier in order to ensure a uniform dispersion of the colourant throughout the polyethylene terephthalate. The liquid carrier is generally an inert material, such as a hydrocarbon oil, an ester, an alcohol, or a mixture of two or more thereof. The liquid carrier is selected to be nontoxic, to have good compatibility with polyethylene terephthalate and to possess good solvent properties (if the colourant additive is to be dissolved in the liquid carrier). Ideally, the quantity of carrier included in the composition is kept to a minimum in order that the properties of the polyethylene terephthalate are not adversely affected.

Typical temperatures required for injection moulding of polyethylene terephthalate moulding compositions are between about 260°C and about 285°C or higher, e.g. up to about 310°C. When producing a coloured preform it is desirable to select a colourant additive composition which will withstand these conditions. Somewhat lower temperatures in excess of about 100°C up to about 170°C or more are generally used in the blow moulding step to produce a bottle from a polyester preform.

It is a recognised phenomenon within the industry that use of extended dwell times at elevated temperatures, particularly during the injection moulding step used to make a polyethylene terephthalate bottle preform but also possibly during the subsequent blow moulding step, may tend to result in an inferior colouration of the preform or blow moulded bottle. Therefore, much effort has been invested in finding colourant additives which have good stability and colouring properties at these temperatures.

It is further recognised that, with an increase in usage of polyethylene terephthalate and other thermoplastic materials for manufacture of packaging and other articles, a greater need arises to address the problem of disposal of the waste material. With land fill space becoming evermore scarce and with society being generally more environmentally aware than ever before, there is an increasing demand that the recycling option be taken. A limited amount of recycled polyethylene terephthalate material is already employed to produce strapping for packaging. Recycled polyethylene terephthalate is also used in the fibre industry to provide such products as wadding and sound insulation for cars and carpets. However, a more satisfactory option would be to recycle coloured packaging of a sufficient quality such that it may be reused for food applications. Presently, colourless polyethylene terephthalate material may be recycled or reused either with or without the addition of colouring, and green coloured material may be recycled to produce further green bottles. However, hereto for the recycling of certain coloured polyethylene terephthalate bottles has proved to be problematic because it has proved difficult to recycle such bottles into materials of acceptable colour. One such example is amber, which colour precludes its use in new colourless or green bottles or in fibre applications.

Another thermoplastic material which is widely used in the packaging industry is so-called "crystal" polystyrene. This material also requires the use of high temperatures during processing. Typical moulding temperatures for this material range from about 220°C to about 300°C. Other thermoplastic materials which are in wide spread use include polyolefins, such as polyethylene and polypropylene, and polyvinyl chloride.

It would be desirable to be able to recycle previously used coloured thermoplastic materials, such as coloured polyethylene terephthalate or coloured "crystal" polystyrene, of any colour in order to produce a material whose colour would permit it to be recycled for further use, for example for food packaging or for use in fibre applications. In particular it would be desirable to be able to recycle used amber coloured polyethylene terephthalate beer bottles in such a way as to produce, for example, a colourless or near colourless material or a green material which can then be utilised in the manufacture of further articles, such as blow moulded articles.

It is possible to coat a colourless bottle with a colouring agent which may then be simply washed off for recycling of the bottle. However, this is an expensive option and is therefore unattractive when considering the high volume of recyclable material to be handled.

It is well known within the industry that polyethylene terephthalate does not exhibit good gas barrier properties. When producing bottles which will be used to package carbonated drinks or alcoholic beverages it is desirable to prevent carbon dioxide from escaping and being replaced by oxygen. It has accordingly been proposed to add a polyamide to the thermoplastic polyester moulding composition in order to confer improved gas barrier properties on it. Alternatively a sandwich construction may be used in which nylon or an ethylene/vinyl alcohol resin is incorporated in a multi-layer preform which is then blow moulded to form a bottle having improved gas barrier properties.

There is a need to provide a polymer colourant additive composition for incorporation into moulding compositions (for example moulding compositions which comprise polyethylene terephthalate and/or other polyesters) which is stable to the conditions required for injection moulding but which will not render the coloured moulding composition unfit for recycling. There is a further need to provide a coloured polyester moulding composition which, after having been formed into bottles or other moulded articles, is suitable for recycling to make further bottles or other articles of a commercially acceptable colour.

There is a further need to provide coloured blow moulded articles, such as bottles, and coloured preforms therefor, which exhibit good gas barrier properties and which provide protection for the contents against ultra-violet light, and which have a good recycling potential.

It is an object of the present invention to provide recycling potential to coloured articles made from thermoplastic materials (such as polyethylene terephthalate or "crystal" polystyrene) where that has not been possible previously due to restrictions placed upon the utility of the recycled material as a result of its colour.

According to the invention there is provided a process for recyling a thermoplastic moulded article comprising:
α) providing a thermoplastic moulded article incorporating as colourant at least one thermolabile sublimable colourant;
β) subjecting the material of the moulded article to elevated temperature conditions for a period of time sufficient to extract at least some of the thermolabile sublimable colourant and form an at least partially colour modified composition; and
γ) recovering the colour modified composition for further recycling steps.

According to one aspect of the present invention there is provided a colourant additive composition for addition to a thermoplastic moulding composition, said additive composition comprising at least one thermolabile sublimable colourant uniformly dispersed in an inert liquid carrier therefor, said inert liquid carrier being compatible with said thermoplastic moulding composition.

The thermolabile sublimable colourant is substantially stable during the formation of a moulded article from the thermoplastic moulding composition. In order to mould such articles it is necessary to heat the composition to a temperature above its softening point. However, it is normally preferred to perform moulding at a temperature below the melting point of the polymer material present in the thermoplastic moulding composition. In the practice of the present invention, it will often be preferred to utilise polymer materials in the moulding composition which can tolerate, or which require the use, high processing temperatures, for example temperatures of at least about 200°C. Some moulding processes may require the use of more severe processing conditions than others. For example, in the formation of a blow moulded polyethylene terephthalate bottle, injection temperatures in the range of from about 260°C to about 285°C or more, e.g. up to about 310°C, can be used in the course of forming a bottle preform whereas a lower temperature of, for example, from about 100°C up to about 170°C is typically used, in combination with a suitable high air pressure of , for example, about 40 bar, in order to blow a bottle of the desired shape from the bottle preform. The thermolabile sublimable colourant is preferably selected such that under the processing conditions and swell times used in manufacturing the moulded article, no substantial sublimation and/or migration of the colourant occurs.

Polyethylene terephthalate used for injection moulding purposes is typically post-condensed and has a molecular weight in the region of about 25,000 to 30,000. However, it has also been proposed to use a fibre grade polyethylene terephthalate which is cheaper but is non-post-condensed, with a lower molecular weight in the region of about 20,000. It has further been suggested to use copolyesters of polyethylene terephthalate which contain repeat units from at least 85 mole % terephthalic acid and at least 85 mole % of ethylene glycol. Dicarboxylic acids which can be included, along with terephthalic acid, are exemplified by phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid and sebacic acid. Other diols which may be incorporated in the copolyesters, in addition to ethylene glycol, include diethylene glycol, triethylene glycol, 1,4-cyclohexanedimethanol, propane-1,3-diol, butane-1,4-diol, pentane-1,5-diol, hexane-1,6-diol, 3-methylpentane-2,4-diol, 2-methyl pentane-1,4-diol, 2,2,4-trimethylpentane-1,3-diol, 2-ethylhexane-1,3-diol, 2,2-diethylpropane-1,3-diol, hexane-1,3-diol, 1,4-di(hydroxyethoxy)-benzene, 2,2-bis-(4-hydroxycyclohexyl)-propane, 2,4-dihydroxy-1,1,3,3-tetramethyl-cyclobutane, 2,2-bis-(3-hydroxyethoxyphenyl)-propane, and 2,2-bis-(4-hydroxypropoxyphenyl)-propane. In this specification the term "polyethylene terephthalate" includes not only polyethylene terephthalate but also such copolyesters.

Injection moulding of polyethylene terephthalate and other polyester moulding compositions is typically carried out using an injection moulding machine and a maximum barrel temperature in the range of from about 260°C to about 285°C or more, for example, up to about 310°C. The dwell time at this maximum temperature is typically in the range of from about 15 seconds to about 5 minutes or more, preferably from about 30 seconds to about 2 minutes.

When the moulded article is recycled it may at some stage of the recycling procedure be exposed to conditions effective to sublime the thermolabile sublimable colourant and cause said colourant to migrate to the atmosphere. Mechanical recycling procedures may involve the following steps:
1. Collection (e.g. of bottles). This is usually organised through bottle collection points and some times by street collection.
2. Colour sorting. This is often done manually although more in-line automated systems are becoming available. The commercial value of polyethylene terephthalate coloured bottles is: clear > blue > green> amber/other transparent and translucent colours > opaque. Clear, blue and green can be blended to give an acceptable final resin colour. Other colours find use either in strapping and staple fibre. There are also some applications in crates and pallets.
3. Grinding. Typically the bottles are ground into fragments of typical thickness 0.15 to 0.4 mm in size of approximately 1 to 2 cm.
4. Separation of polyethylene terephthalate from contaminants. This is usually done by flotation or other means such as air separation. This removes closures, labels, internal barrier layers, soil etc.
5. Washing. Typical composition of a wash is 1.8% sodium hydroxide. Bottles are typically washed at 80 to 85°C. This removes external barrier layers, plus more importantly, microbiological material and potentially toxic compounds.
6. Drying. Usually by hot air.
7. Extrusion and pelletizing. A vacuum pump is employed to remove volatiles.
8. Solid stating. This is usually conducted by convected heating at from about 220°C to about 240°C for 2 to 3 hours. This increases the IV to the required level. For bottle blowing this is typically 0.72 - 0.84 dL/g.

By appropriate choice of thermolabile sublimable colourant and recycling conditions, exposure of the moulded article to these recycling steps, in particular steps 7 and 8, can extract some or all of the thermolabile sublimable colourant from the material of the moulded article, thereby causing said material to undergo a desirable colour change. For example, a green coloured composition may by this procedure (involving the solid stating procedure in stage 8) be converted to a blue coloured composition, or a red coloured composition can be converted to a colourless or near colourless composition, or an amber coloured composition may be converted to a substantially colourless composition or a green coloured composition. However, this list of colour changes is not exhaustive and many other colour changes utilising the teachings of the invention can be achieved. Hence in a typical procedure the colour of the material of the moulded article comprising the thermolabile sublimable colourant can be changed by exposing it to solid stating conditions comprising a temperature of at least about 200°C for at least about two hours. This procedure is extremely useful for enabling recycling of coloured polyester moulded articles, such as amber coloured beer bottles, for re-use, since the undesirable amber colour, from the point of view of the recycler, can be converted by use of the invention to an acceptable colour for recycling, such as green or even colourless or near colourless.

The polymer colourant additive composition of the present invention includes a polymer-compatible organic liquid carrier. Such a carrier must be compatible with the polymer material of the thermoplastic moulding composition and is preferably also compatible with the other components to be included in the thermoplastic moulding composition of the invention. Typical carriers include hydrocarbons, hydrocarbon mixtures, alcohols, esters and mixtures of two or more thereof. Preferably the polymer-compatible organic liquid carrier is an oil based vehicle. Examples of such vehicles of the materials available as Clearslip ™ 2 and Clearslip™ 3 from ColourMatrix Europe Ltd., of Unit 9-11, Unity Grove, Knowsley Business Park, Knowsley, Merseyside, L34 9GT.

The polymer colourant additive composition may also include one or more non-thermolabile and/or non-sublimable colourants, in addition to the at least one thermolabile sublimable colourant, if desired.

The polymer colourant additive composition may also comprise a plurality of thermolabile sublimable dyes. Differently coloured thermolabile sublimable dyes may be chosen in the additive compostion in relative proportions to achieve a desirable colour effect with or without combination with one or more non-thermolabile and/or non-sublimable colourants.

The thermolabile sublimable colourant may comprise a solvent or disperse dye. Such dyes may be dissolved or dispersed in the organic liquid carrier but are soluble in the polymer material of the thermoplastic moulding composition and produce a uniform colouration of the final article. Suitable solvent dye groups include anthraquinone, indanthrone, monoazo, diazo, methine, quinophthalone, perinone, naphthalidimide and thioindigo dyes. The colourant additive composition may contain a single dye or a mixture of dyes depending upon the desired colouration of the article. For example, in order to produce an amber coloured bottle there may be required a mixture of a red dye, a yellow dye and a blue dye. Examples of suitable dyes for use in the present invention also include solvent dyes such as the anthraquinones Violet 13 and Red 111 and Solvent Yellow 114.

The amount of colourant additive composition to be used in the thermoplastic moulding composition can vary widely depending upon the final colouring effect and colour strength desired in the finished article. The colourant additive composition is made by mixing the dry colourant or colourants in the form of a powder with a liquid organic carrier, typically in a range of from about 1 to about 85 wt %, more usually in the range of from about 30 to about 50 wt %. The resulting colourant additive composition comprising the thermolabile sublimable dye or dyes uniformly dissolved or dispersed in the liquid carrier can then be added to the polymer in ranges from about 0.0001 % by weight to about 7% by weight, for example, from 0.01 % by weight up to about 5% by weight, based upon the weight of polymer component used. It is not desirable to use higher concentrations of the colourant as this may interfere with the properties of the polymer material.

The polymer colourant additive composition may comprise a mixture of a red colourant, a blue colourant, and a yellow colourant in proportions such as to impart an amber colour to a bottle preform extruded therefrom or to a bottle blow moulded from said bottle preform.

Also provided in accordance with the invention is a thermoplastic moulding composition comprising a thermoplastic material with at least one thermolabile sublimable uniformly dispersed therein.

The invention also provides a moulded article from such a thermoplastic moulding composition.

The invention further provides a process for recycling a moulded article which includes subjecting the moulded article to sublimation conditions at some stage of the recycling process.

In another aspect of the present invention there is provided a method for making a moulded article from a coloured thermoplastic moulding composition which comprises:
(a) providing a thermoplastic moulding composition;
(b) admixing with the thermoplastic moulding composition at least one thermolabile sublimable colourant material to form a coloured thermoplastic moulding composition;
(c) heating the coloured thermoplastic moulding composition; and
(d) moulding the hot coloured thermoplastic moulding composition so as to form a moulded article.

In such a method said at least one thermolabile sublimable colourant is preferably admixed with the thermoplastic moulding composition in the form of a polymer colourant additive composition comprising said at least one thermolabile sublimable colourant uniformly dispersed in an inert liquid carrier therefor. However, it is alternatively possible to add the colourant or colourants in any convenient manner, for example in particulate form such a powder or in admixture with a solid carrier.

Preferably the coloured thermoplastic moulding composition is substantially free from carbon black and from inorganic pigments.

Typically the coloured thermoplastic moulding composition is injection moulded to form a bottle preform and the resulting bottle preform is then blow moulded to form a bottle.

The invention further provides a method of making a blow moulded bottle from a polyester moulding composition which comprises:
(i) providing a polyester moulding composition;
(ii) admixing with the polyester moulding composition at least one thermolabile sublimable colourant material to form a coloured polyester moulding composition;
(iii) heating the coloured polyester moulding composition;
(iv) extruding the hot coloured polyester moulding composition so as to form a bottle preform; and
(v) blow moulding the bottle preform at a blow moulding temperature so as to form a coloured bottle.

Also provided in accordance with another aspect of the present invention is a method of making a useful article which comprises:
(A) providing a thermoplastic moulding composition;
(B) admixing with the thermoplastic moulding composition at least one thermolabile sublimable colourant material to form a coloured thermoplastic moulding composition;
(C) forming a coloured moulded article by a procedure including heating the coloured thermoplastic moulding composition and moulding said hot composition into a moulded article;
(D) after use of the moulded article, subjecting the material of the moulded article to recycling steps which include subjecting the material of the moulded article to elevated temperature conditions for a period of time sufficient to cause said material of the moulded article to undergo a desirable change of colour as a result of sublimation and migration to the atmosphere of at least some of the colourant material; and
(E) re-forming the thus treated material into a useful article.

The elevated temperature conditions to which the material of the moulded article is subjected in the recycling stage (D) are selected to be sufficient to cause said desirable change of colour in the moulded article material. The variables in the conditions include temperature and time of exposure and may include pressure.

In one preferred process according the invention, the sublimated colourant is recovered and may then be re-used.

In the re-forming step (E) typically techniques that can be used include moulding, extrusion, and other conventional processes for making articles of plastics materials, including fibres.

In such a method the coloured thermoplastic (e.g. polyester) moulding composition in step (B) can be injection moulded to form a bottle preform and then the resulting bottle preform can be blow moulded to form a bottle.

The invention further provides a method of making an article from a coloured thermoplastic moulding composition which comprises:
(I) providing a coloured thermoplastic moulding composition comprising recycled coloured thermoplastic material, said recycled coloured thermoplastic material containing at least one thermolabile sublimable colourant material;
(II) subjecting the coloured thermoplastic moulding composition to elevated temperature conditions for a period of time sufficient to extract at least some of the thermolabile sublimable colourant and form an at least partially colour modified composition; and
(III) extruding the resulting at least partially colour modified composition to form said article.

The article of step (III) may be a moulded article, such as a bottle preform, or a fibre or any other useful article, such as a tube, a crate, or the like.

Polyethylene terephthalate is hygroscopic and after a period of approximately one year it is noticeable that preforms made of polyethylene terephthalate have taken up moisture from the air. Therefore, prior to the injection moulding process, polyethylene terephthalate granules for use in the invention are preferably dried for at least about 6 hours at from about 160°C to about 190°C, in a procedure which gives a slightly tactile product. The polyethylene terephthalate granules are transferred directly from the drier to the hopper of the injection moulding machine. The polymer colourant additive composition of the current invention can then be added to and mixed with the polymer granules upon charging to the hopper. The injection moulding process typically occurs at between about 260°C and about 285°C, more preferably at about 270°C, and the polymer material has a dwell time within the machine of less than 1 minute. Longer dwell times may result in inferior colouration of the preform. Once the preform has been blow moulded into an appropriate article, said article may be recycled by a suitable procedure which includes use of temperatures of up to about 300°C or greater and dwell times up to or in excess of 5 minutes. When injection moulded into a preform, the recycled material exhibits a different colour from that of the original colourant additive composition used and hence that of the material which has been recycled. For example the colour change may be from amber to green, black to blue or amber to colourless.

The thermoplastic moulding composition of the invention may be utilised to produce a multi-layer bottle comprising a layer of nylon or ethylene/vinyl alcohol copolymer sandwiched between layers of said moulding composition. This is particularly effective when colourant additive compositions are employed which produce dark coloured bottles (such as amber or green) as not only does the bottle exhibit good gas barrier properties but also good ultra-violet light barrier properties.

The invention is further illustrated in the following examples in which temperatures are in °C and parts and percentages are by weight.

### Example 1

A mixture was prepared from 15 parts of Violet 13 dispersed in 51 parts of Clearslip™ 1 as inert carrier. Clearslip™ 1 is available from ColourMatrix Europe Limited of Units 9-11, Unity Grove, Knowsley Business Park, Knowsley, Merseyside, L34 9GT. 0.1 parts of the resulting dispersion were introduced with 99.9 parts of Eastman 9921 W polyethylene terephthalate granules, which had previously been dried by heating for 4 hours at 170°C, into the feed hopper of an Engle 80 tc extrusion moulding machine and extruded at a barrel temperature of 275°C with a dwell time at this temperature of about 2 minutes to form a number of bottle preforms, each weighing 34.5 grams.

Each of the bottle preforms had a satisfactory colour.

The bottle preforms were then heated for a period of from about 20 seconds to about 40 seconds using radiant heaters to a temperature in the range of from about 95°C to about 110°C and blow moulded using air at 40 bar to form bottles having a capacity of 1 litre.

A number of the resulting bottles were recycled by a procedure in which they were shredded and fed to the inlet hopper of a granulating machine and then washed in a caustic wash solution comprising 1.8 % sodium hydroxide at a temperature of between about 80°C and 85°C for a period of about one hour. The dried granules were then extruded at a barrel temperature of about 275°C with a dwell time at this temperature of about 2 minutes, and then pelletised. The resulting pelletes were subjected to solid stating conditions for approximately 2 hours at 230°C under vacuum producing substantially colourless pelletes which were successfully extruded and blow moulded to form bottles of satisfactory appearance and properties.

### Example 2

Example 1 was partially repeated using Solvent Red 111 in place of Violet 13 to produce moulded bottle preforms containing 100ppm Solvent Red 111. The bottle preforms were reground and then loaded into a vacuum oven at 220°C for 16 hours. After this vacuum extraction the reground PET was moulded into a plaque and colour was measured, showing that 70%of the dye had been removed.

## Claims

1. A process for recyling a thermoplastic moulded article comprising:
α) providing a thermoplastic moulded article incorporating as colourant at least one thermolabile sublimable colourant;
β) subjecting the material of the moulded article to elevated temperature conditions for a period of time sufficient to extract at least some of the thermolabile sublimable colourant and form an at least partially colour modified composition; and
γ) recovering the colour modified composition for further recycling steps.

2. A process according to claim 1 wherein the material of the moulded article is subjected to elevated temperature conditions for a period of time sufficient to extract at least 10% of the thermolabile sublimable colourant.

3. A process according to claim 2 wherein the material of the moulded article is subjected to elevated temperature conditions for a period of time sufficient to extract at least 20% of the thermolabile sublimable colourant.

4. A process according to claim 3 wherein the material of the moulded article is subjected to elevated temperature conditions for a period of time sufficient to extract at least 30% of the thermolabile sublimable colourant.

5. A process according to claim 4 wherein the material of the moulded article is subjected to elevated temperature conditions for a period of time sufficient to extract at least 40% of the thermolabile sublimable colourant.

6. A process according to any one of claims 1 to 5, further including the step of recovering the extracted colourant for re-use.

7. A process according to any one of claims 1 to 6 wherein the material of the moulded article is subjected to elevated temperature conditions for a period of time sufficient to extract at least some of the thermolabile sublimable colourant and form an at least substantially colour modified composition.

8. A process according to any one of claims 1 to 7 wherein the thermoplastic moulded article comprises two or more thermolabile sublimable colourants.

9. A process according to claim 8 wherein, said two or more thermolabile sublimable colourants comprise at least two selected from a violet colourant, a yellow colourant, a red colourant and a blue colourant.

10. A process according to any one of claims 1 to 9, in which the thermoplastic moulded article is made from a polyester.

11. A process according to any one of claims 1 to 10 wherein the coloured thermoplastic moulded article is substantially free from carbon black and from inorganic pigments.

12. A process for making a useful article which comprises:
(A) providing a thermoplastic moulding composition;
(B) admixing with the thermoplastic moulding composition at least one thermolabile sublimable colourant material to form a coloured thermoplastic moulding composition;
(C) forming a coloured moulded article by a procedure including heating the coloured thermoplastic moulding composition and moulding said hot composition into a moulded article;
(D) after use of the moulded article, subjecting the material of the moulded article to recycling steps which include subjecting the material of the moulded article to elevated temperature conditions for a period of time sufficient to cause said material of the moulded article to undergo a desirable change of colour as a result of sublimation and migration to the atmosphere of the colourant material; and
(E) re-forming the thus treated material into a useful article.

13. A process according to claim 12 including the step of recovering the sublimated and migrated colourant from step (D) for subsequent re-use.

14. A process for making an article from a coloured thermoplastic moulding composition which comprises:
(I) providing a coloured thermoplastic moulding composition comprising recycled coloured thermoplastic material, said recycled coloured thermoplastic material containing at least one thermolabile sublimable colourant material;
(II) subjecting the coloured thermoplastic moulding composition to elevated temperature conditions for a period of time sufficient to extract at least some of the thermolabile sublimable colourant and form an at least partially colour modified composition; and
(III) extruding the resulting at least partially colour modified composition to form said article.

15. A process according to claim 14 including the step of recovering at least some of the extracted thermolabile sublimable colourant from step (II) for subsequent re-use.

16. A process according to claim 14 or claim 15 wherein in step (III) the at least partially colour modified composition is injection moulded to form a bottle preform and wherein the resulting bottle preform is then blow moulded to form a bottle.

17. The product of a process according to any one of claims 1 to 16.
